(19) **Europäisches Patentamt**
**European Patent Office**
**Office européen des brevets**

(11) **EP 2 100 665 A1**

(12) **EUROPEAN PATENT APPLICATION**
published in accordance with Art. 153(4) EPC

(43) Date of publication:
**16.09.2009 Bulletin 2009/38**

(21) Application number: **08720707.2**

(22) Date of filing: **12.02.2008**

(51) Int Cl.:
**B01J 35/10** (2006.01)   **B01D 53/94** (2006.01)
**B01J 29/14** (2006.01)   **F01N 3/10** (2006.01)

(86) International application number:
**PCT/JP2008/052269**

(87) International publication number:
**WO 2008/099814 (21.08.2008 Gazette 2008/34)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.02.2007 JP 2007032284**
**15.11.2007 JP 2007296204**

(71) Applicant: **BABCOCK-HITACHI K.K.**
**Chiyoda-ku**
**Tokyo 101-0021 (JP)**

(72) Inventors:
• **YOSHIDA, Noriko**
**Hitachi-shi**
**Ibaraki 319-1221 (JP)**

• **IIZUKA, Hidehiro**
**Hitachi-shi**
**Ibaraki 319-1221 (JP)**
• **KATO, Yasuyoshi**
**Kure-shi**
**Hiroshima 737-8508 (JP)**
• **NAGAI, Yoshinori**
**Kure-shi**
**Hiroshima 737-8508 (JP)**
• **ARATO, Toshiaki**
**Hitachi-shi**
**Ibaraki 319-1221 (JP)**

(74) Representative: **Beetz & Partner**
**Patentanwälte**
**Steinsdorfstrasse 10**
**80538 München (DE)**

(54) **CATALYST FOR REMOVAL OF NITROGEN OXIDE, AND METHOD FOR REMOVAL OF NITROGEN OXIDE**

(57)    A nitrogen oxide removing catalyst for removing nitrogen oxides from an exhaust gas is prevented from being poisoned by a phosphorous compound included in the exhaust gas. A nitrogen oxide removing catalyst superior in durability and a method of removing nitrogen oxides are provided.

A porous material having fine holes with controlled diameters and a catalyst having an active ingredient supported in the fine holes in the porous material are used. A first invention is **characterized in that** the diameter of the plurality of fine holes is within a range of 8 to 9 Å. The fine hole diameter is preferably from 8 to 9 Å when the diameter is measured in a gas adsorption method in which fine holes with diameters of 3.4 to 14 Å can be measured. The fine hole diameter is also preferably from 8 to 9 Å when the fine hole diameter is calculated from a crystal structure. A second invention is **characterized in that** the porous material is mesoporous silica. The primary particle diameter of the mesoporous silica is preferably within a range of 150 to 300 nm.

*FIG. 3*

**Description**

Technical Field

The present invention relates to a catalyst used to remove nitrogen oxides from an exhaust gas including the nitrogen oxides and a phosphorous compound and to a method of removing nitrogen oxides by using the catalyst.

Background Art

A method of removing nitrogen oxides (NOx) from an exhaust gas by reducing them with ammonia ($NH_3$) enables the use of a simple system and improves efficiency, so the method is dominant in a denitration process for various types of exhaust gases, including exhaust gases resulting from boiler combustion, which are generated from fixed sources. In this process, a denitration catalyst is required to promote a reaction between NOx and $NH_3$.

Low-grade coal and low-grade crude oil including much mineral matter are recently tending to be used as fuels. When this type of low-grade coal or low-grade crude oil is burnt, volatile metal compounds mainly generated from mineral matter, particularly, oxides of selenium, tellurium, thallium, arsenic, and the like are included in exhaust gases, causing a problem in that catalysts are poisoned by these oxides.

Low-grade coal has poor combustibility, leaving unburnt coal in ash. When this type of low-grade coal is used, a method by which the ash is returned to the boiler for reburning is often employed. In this method, however, the above catalyst poisoning substances fly in the boiler and are deposited in fly ash as the exhaust gas temperature lowers. Since the ash is returned to the boiler and recycled, the catalyst poisoning substances fly again in the exhaust gas. Accordingly, the concentration of the catalyst poison substances becomes higher than a value predicted from the intrinsic content of the fuel, causing a problem of further facilitating deterioration of the catalyst.

It is known that a catalyst in which zeolite with an average fine hole diameter of 8 Å or less and a silica/aluminum ratio of 10 or more are mutually mixed with titanium oxide and one or more elements selected from copper, molybdenum, tungsten, vanadium, and iron is present in the zeolite at a higher concentration than in the titanium oxide is used to prevent the catalyst from being poisoned by volatile metal compounds included in an exhaust gas, particularly, oxides of selenium, tellurium, thallium, arsenic, and the like (see Patent Document 1, for example). It is also known that a denitration catalyst is formed by supporting an active ingredient in a carrier with fine holes with diameters of 3.6 to 5.8 Å so as to prevent the denitration catalyst from being poisoned by an arsenic compound included in an exhaust gas (see Patent Document 2, for example).

Patent Document 1: Japanese Patent Laid-open No. Sho 63(1988)-12350 (Claims)
Patent Document 2: Japanese Patent Laid-open No. Sho 63(1988)-51948 (Claims)

DISCLOSURE OF THE INVENTION

Problems to be Solved by the Invention

Coal including phosphorus has been used as a fuel in recent years. In this case, since a phosphorous compound is included in a coal fuel combustion gas, it is necessary to prevent a catalyst from being poisoned by the phosphorous compound. In Patent Documents 1 and 2, a consideration to prevent the catalyst from being poisoned by the phosphorous compound is not given.

Since control of nitrogen oxide emissions from boilers has been enhanced, attempts have been made to reduce creation of nitrogen oxides in boilers by adjusting air-fuel ratios. In this case, the combustion temperature of the boiler is raised, so it is predicted that the phosphorous compound concentration in the exhaust gas is higher than in the past.

An object of the present invention is to provide a nitrogen oxide removing catalyst that is superior in durability because it can prevent poisoning by a phosphorous compound included in an exhaust gas, and also provides a method of removing nitrogen oxides.

Means for Solving the Problems

The present invention, which solves the above problems, uses a nitrogen oxide removing catalyst that includes a porous material in which fine hole diameters are controlled and also uses an active ingredient that is supported in fine holes of the porous material to remove nitrogen oxides.

A first invention is characterized in that the fine holes in the porous material have diameters of 8 to 9 Å. The fine hole diameter is preferably from 8 to 9 Å when the diameter is measured in a gas adsorption method in which fine holes with diameters of 3.4 to 14 Å are measured. The fine hole diameter is also preferably from 8 to 9 Å when the fine hole diameter is calculated from a crystal structure. When the total fine hole volume of fine holes with diameters of 3.4 to 14 Å and the total fine hole volume of fine holes with diameters of 7 to 10 Å are measured in a gas adsorption method in which fine holes with diameters of 3.4 to 14 Å are measured, the total fine hole volume of the fine holes with diameters of 7 to 10 Å is preferably 50% or more of the total fine hole volume of fine holes with diameters of 3.4 to 14 Å.

A second invention is characterized in that the porous material is mesoporous silica. A primary particle diameter of mesoporous silica is preferably within a range of 150 to 300 nm. Mesoporous silica has elongated fine holes, so its fine holes need only to have a diameter of 20 to 80 Å.

The active ingredient has the effect of reducing nitrogen oxides. An appropriate active ingredient can be selected according to the nitrogen oxide removing reaction.

The nitrogen oxide removing catalyst in the present invention can be used in a denitration apparatus for removing nitrogen oxides from an exhaust gas emitted from a boiler or the like. The nitrogen oxide removing catalyst can be used to form a catalyst plate by appropriately coating a substrate or the like with the catalyst. In the denitration apparatus, a reducing agent is supplied to the nitrogen oxide removing catalyst as necessary.

Advantages of the Invention

According to the above structure, a nitrogen oxide removing catalyst that is superior in durability because it can prevent poisoning by a phosphorous compound can be provided.

BRIEF DESCRIPTION OF DRAWINGS

FIG. 1 is a block diagram illustrating the structure of a boiler equipped with a denitration apparatus.
FIG. 2 shows an example of a catalyst unit disposed in the denitration apparatus.
FIG. 3 schematically shows primary particles of a catalyst on which an active ingredient of the catalyst is supported in fine holes in mesoporous silica.
FIG. 4 schematically shows secondary particles of the catalyst.
FIGs. 5A and 5B schematically show a catalyst plate.
FIGs. 6A and 6B schematically show a catalyst plate that uses more than one type of nitrogen oxide removing catalyst.
FIG. 7 is a graph illustrating distributions of differential fine hole volumes with respect to average fine hole diameters of example catalysts.
FIG. 8 is another graph illustrating distributions of differential fine hole volumes with respect to average fine hole diameters of example catalysts and a comparative example catalyst.

Legend

1 Boiler
2 Denitration apparatus
3 Catalyst plate
4 Frame member
5 Mesoporous silica
6 Catalyst active ingredient
7 Catalyst primary particle
8 Catalyst secondary particle
9 Metal mesh member
10 Plate-like substrate
11 Another nitrogen oxide removing catalyst

DETAILED DESCRIPTION OF THE PREFERRED EMBODIMENTS

Best Mode for Carrying Out the Invention

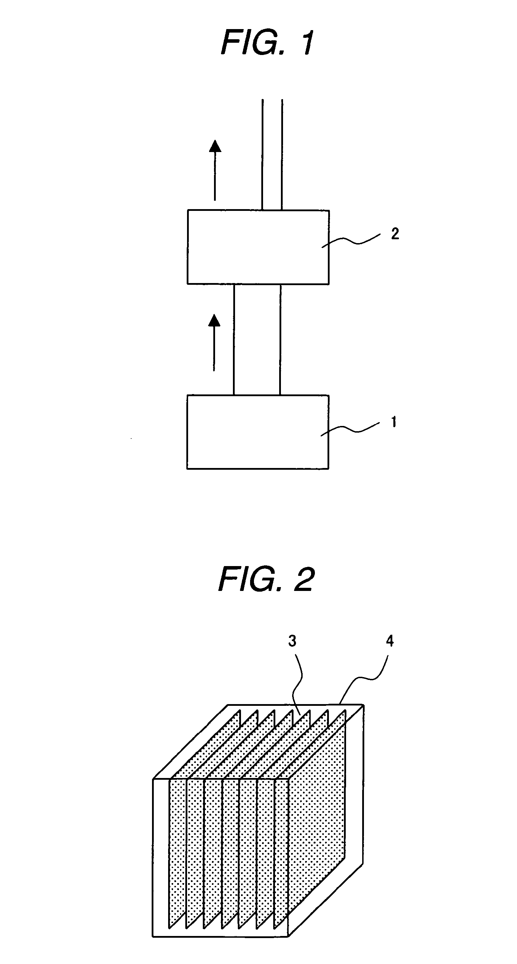

The above invention in the present application will be described in further detail. As shown in FIG. 1, to remove nitrogen oxides from an exhaust gas emitted from a boiler or the like, a denitration apparatus 2 is provided on an exhaust path behind a boiler 1. In general, a heat exchanger and other units are disposed on the path between the boiler and the denitration apparatus. A catalyst for removing nitrogen oxides is provided in the denitration apparatus. A plurality of catalyst units, in each of which a plurality of catalyst plates 3 are fixed to a frame member 4, are provided, as shown in FIG. 2, simplifying maintenance.

A first catalyst and a second catalyst will be respectively described below in a first embodiment and a second embodiment.

First embodiment

A first nitrogen oxide removing catalyst will be described first in detail. In the first invention, a nitrogen oxide removing catalyst formed from a material having controlled fine holes, in which an active ingredient is supported, is used to remove nitrogen oxides from an exhaust gas including the nitrogen oxides and a phosphorous compound. Specifically, a reducing agent and an exhaust gas including the nitrogen oxides and phosphorous compound are brought into contact with the above catalyst to remove the nitrogen oxides from the exhaust gas through reduction.

In the first invention, the above material having controlled fine holes preferably has an average fine hole diameter or a fine hole diameter of 8 to 9 Å, the average fine hole diameter being obtained from fine holes measured in a gas adsorption method in which fine holes with diameters of 3.4 to 14 Å are measured, the fine hole diameter being calculated from a crystal structure. Alternatively, in the above material, it is preferable for the volume of fine holes with diameters of 7 to 10 Å to occupy 50% or more of the total fine hole volume of fine holes with diameters of 3.4 to 14 Å measured in a gas adsorption method in which fine holes with diameters of 3.4 to 14 Å are measured.

In particular, in the above material having controlled fine holes, it is preferable for the volume of fine holes with diameters of 7 to 10 Å to occupy 50% or more of the total fine hole volume of fine holes with diameters of 3.4 to 14 Å measured in a gas adsorption method in which fine holes with diameters of 3.4 to 14 Å are measured, and it is also preferable for the volume of fine holes with diameters of 7 to 10 Å measured in a gas adsorption method in which fine holes with diameters of 3.4 to 14 Å are measured to occupy 20% or more of the total fine hole volume of the catalyst measured in a nitrogen adsorption method in which fine holes with diameters of 10 to 3000 Å can be measured.

The shape of each fine hole in the material having controlled fine holes preferably has a two-dimensional or three-dimensional structure. The material having controlled fine holes is preferably Y-type zeolite or X-type zeolite. It is also preferable for the material having controlled fine holes to support at least one selected from Cu, Fe, Co, vanadium, molybdenum, and tungsten as the active ingredient.

In the first invention, nitrogen oxides are removed from an exhaust gas including the nitrogen oxides and a phosphorous compound by a catalyst that has a multi-layer structure in which a plurality of nitrogen oxide removing catalysts are disposed as a multilayer; the nitrogen oxide removing catalyst in the outermost layer supports the active ingredient in fine holes in the material having controlled fine holes.

In the first invention, nitrogen oxides are removed from an exhaust gas including the nitrogen oxides and a phosphorous compound by a catalyst exposed to poisoning; when the fine hole diameter of the catalyst is measured under a condition in which the catalyst is completed by adjusting a ratio of the fine hole diameter of the catalyst to the molecule diameter of the phosphorous compound to have the active ingredient supported in a carrier, a ratio B/A between the molecule diameter A of the phosphorous compound and the average fine hole diameter of the catalyst or the fine hole diameter B calculated from the crystal structure is greater than or equal to 0.78 and smaller than or equal to 1.12, particularly, in the catalyst, the volume occupied by fine holes with fine hole diameters, the fine hole diameter ratio B/A of which is greater than or equal to 0.78 and smaller than or equal to 1.12, is 20% or more of the total fine hole volume of the catalyst measured in a gas adsorption method in which all fine holes are measured.

According to the first invention, in the removal of nitrogen oxides in an exhaust gas including a phosphorous compound, it has become possible to enhance durability by suppressing catalyst poisoning by the phosphorous compound and efficiently remove the nitrogen oxides.

Materials having controlled fine holes that can be used as catalyst materials include zeolite, mesoporous materials, and interlayer clay compounds. Examples of zeolite with an average fine hole diameter or fine hole diameter of 8 to 9 Å include faujasite Y-type zeolite and X-type zeolite, the average fine hole diameter being measured in a gas adsorption method in which fine holes with diameters of 3.4 to 14 Å are measured, the fine hole diameter being calculated from a crystal structure. For the Y-type zeolite and X-type zeolite, even when a catalyst active ingredient is supported by an ion exchange method or another method, the fine hole diameters do not largely change, keeping the diameters of fine holes in a formed catalyst within a range of 8 to 9 Å described above.

The mesoporous materials include mesoporous silica, mesoporous titania, mesoporous alumina, and aluminum phosphate. In some mesoporous materials, part of mesoporous silica, mesoporous titania, and the like is replaced with Al, titanium, Si, and the like. The fine hole diameter of these materials is more than several nanometers. When these regularly controlled fine holes are used to support the carrier ingredient of the catalyst and active ingredient in the fine holes so that the fine hole diameters are adjusted and the fine hole diameters of a finally formed catalyst are controlled to 8 to 9 Å, the catalyst effectively acts as the catalyst of the first invention.

The interlayer clay compounds include clay minerals in the smectite group such as montmorillonite and hectorite, the vermiculite group, and the mica group. The interlayer distances of these interlayer clay compounds are not always within a range of 8 to 9 Å. When alumina, zirconia, titania, or another oxide or a metal oxide is inserted between layers of the interlayer clay compound to set up pillars, the interlayer distance can be increased. Then, when metal elements used as catalyst ingredients are exchanged with cations and supported in the clay compound, the interlayer distance or a void diameter allowing reaction gas diffusion in the finally formed catalyst can be controlled to 8 to 9 Å.

When a mesoporous material such as zeolite or mesoporous silica is synthesized by using a template such as a surfactant, regular fine holes are formed, producing a material having controlled fine holes. In addition to these controlled fine holes, the catalyst may have fine holes formed by voids of fine particles. A material in which voids of these fine particles have a fixed size also effectively acts as the material having controlled fine holes.

Although the present invention is characterized in that, in a catalyst manufactured by supporting an active ingredient in controlled fine holes in a material, the average fine hole diameter of fine holes with diameters of 3.4 to 14 Å that are measured in a gas adsorption method in which fine holes with diameters of 3.4 to 14 Å are measured or a fine hole diameter calculated from a crystal structure is controlled to 8 to 9 Å, fine holes with other fine hole diameters may be included.

This is because although the material having controlled fine holes has a regular structure in which fine hole diameters are controlled to particular sizes, a fine hole distribution has a certain width. Another reason is that when the fine hole diameters are adjusted to the above range of 8 to 9 Å by supporting the carrier ingredient and active ingredient in the mesoporous material and modifying them, new fine holes may appear in the resulting catalyst due to the supported ingredients besides the inherent regular fine holes.

A catalyst that is extremely suitable as the nitrogen oxide removing catalyst in the first invention is a catalyst in which the volume of fine holes with diameters of 7 to 10 Å occupies 50% or more of the total fine hole volume of fine holes with diameters of 3.4 to 14 Å measured in a gas adsorption method for Ar gas, $N_2$ gas, and the like in which fine holes with diameters of 3.4 to 14 Å are measured. In addition, the catalyst most suitable as the nitrogen oxide removing catalyst in the first invention is a catalyst in which the volume of fine holes with diameters of 7 to 10 Å measured in the above gas adsorption method in which fine holes with diameters of 3.4 to 14 Å can be measured occupies 20% or more of the total fine hole volume of the catalyst measured in a gas adsorption method in which fine holes with diameters of 10 to 3000 Å are measured. It will be appreciated that a catalyst in which all or nearly all fine holes have diameters of 7 to 10 Å is optimum.

When Y-type zeolite or X-type zeolite is used to form a catalyst, at least one selected from Cu, Fe, Co, vanadium, molybdenum, and tungsten is preferably supported as the active ingredient of the catalyst. Methods of supporting the active ingredient include an ion exchange method, an impregnation method, and a mixing method. There is no particular limitation if the active ingredient is placed and supported in fine holes. In the ion exchange method of these methods, active metal was supported in ion exchange sites in fine holes in zeolite by being exchanged. Since the active ingredient is reliably supported in fine holes, the ion exchange method is effective. Raw materials such as Cu, Fe, Co, vanadium, molybdenum, and tungsten, nitrates, acetates, sulfate, halides, ammonium salts, oxalates, and other salts thereof that are soluble in water or organic solvents can be used.

The Y-type zeolite or X-type zeolite used in the first invention has no limitation on a mole ratio between $SiO_2$ and $Al_2O_3$ constituting the zeolite, that is, $SiO_2/Al_2O_3$. In general, when the silica composition is high, that is, the $SiO_2/Al_2O_3$ ratio is high, the zeolite is superior in water resistance. When the ratio is 10 or more, the zeolite is particularly superior in water resistance. The amount of ion exchange sites in zeolite depends on the amount of Al. Accordingly, when a material has a high $SiO_2/Al_2O_3$ ratio, the amount of ion exchange is reduced and thereby the active ingredient is less likely to be supported in fine holes. It suffices to select a $SiO_2/Al_2O_3$ ratio in view of a tradeoff between these characteristics.

When Y-type zeolite or X-type zeolite is used to form a catalyst, a preferable amount of Cu, Fe, Co, vanadium, molybdenum, or tungsten supported as the active ingredient of the catalyst is 0.5 wt% or more based on the element weight percent (wt%). If the amount is less than 0.5 wt%, the amount of the active ingredient is small and nitrogen oxide removing performance is insufficient. It is also preferable to support the active ingredient by an amount less than an ion exchange amount calculated from the $SiO_2/Al_2O_3$ ratio of zeolite used, that is, weight percent when a maximum amount of elements that can be ion-exchanged is supported. In the first invention, it is necessary to support the active ingredient of the catalyst in the fine holes, as described above. If the amount of active ingredient that is supported is more than the amount of ion exchange, the amount of active ingredient supported in other than the fine holes in the zeolite increases, reducing the effect of the present invention.

After preparation has been carried out under the above conditions and the active ingredient has been supported in the material having controlled fine holes, the material is well dried at a temperature of 200°C or less and then burnt for one to 10 hours at a temperature below 800°C, preferably, within a temperature range of 300°C to 700°C in an atmosphere of an inert gas or air, so as to obtain catalyst powder.

The catalyst prepared in this way is subject to molding without further treatment or after a bonding agent such

as $TiO_2$, $SiO_2$, or $Al_2O_3$ and water are added. A desired shape can be selected for the molded product, according to the reactor to which the catalyst is applied and the gas flowing condition. For example, the catalyst may be shaped like particles, pellets, a honeycomb, or a plate. When the molded product is dried at a temperature of 100°C or higher and then burnt for one to 10 hours at a temperature below 800°C, preferably, within a temperature range of 300°C to 700°C in an atmosphere of an inert gas or air, the strength of the product can be increased.

The catalyst in the first invention can be used not only alone but also together with another type of nitrogen oxide removing catalyst. In a honeycomb-like catalyst or plate-like catalyst, a catalyst layer comprising the catalyst in the first invention is formed on a conventional nitrogen oxide removing catalyst so that a reaction gas is brought into contact with the catalyst layer of the first invention before being brought into contact with the conventional catalyst. It is then possible that the honeycomb-like catalyst or plate-like catalyst is less deteriorated and has a longer life than a conventional catalyst comprising only a catalyst component.

To remove nitrogen oxides (NOx) from an exhaust gas by using the catalyst manufactured as described above, a mixed gas of the exhaust gas including nitrogen oxides and an ammonia gas, which is a reducing agent, may come into contact with the catalyst of the first invention at a temperature of 300°C or higher, for example. As the reducing agent, a compound other than ammonia, such as urea, which produces ammonia when being decomposed, carbon hydride, or carbon monoxide (CO) may circulate.

The catalyst in the first invention is less likely to undergo deterioration due to a phosphorous compound, which is an anti-catalyst, in an exhaust gas, so the catalyst maintains activity for a long period of time. The reasons why the catalyst in the first invention is less likely to undergo deterioration due to a phosphorous compound are: the active ingredient is supported in fine holes in a material having controlled fine holes; and, in the catalyst manufactured by supporting the active ingredient in the controlled fine holes in the material, the average fine hole diameter of fine holes with diameters of 3.4 to 14 Å that are measured in a gas adsorption method in which fine holes with diameters of 3.4 to 14 Å are measured or a fine hole diameter calculated from a crystal structure is controlled to 8 to 9 Å.

Although a detailed mechanism of catalyst deterioration due to a phosphorous compound included in an exhaust gas is unclear, a possible reason for the deterioration in activity is that the phosphorous compound is adsorbed in the active ingredient, which acts as an activity point in the catalyst reaction or that a reaction of nitrogen oxides, ammonia, oxygen, and other reactants is impeded because, for example, a chemical compound is formed after the adsorption. Accordingly, to suppress the deterioration, it suffices to form a structure that enables the reactants to come into contact with the activity point of the catalyst but prevents the phosphorous compound, which is an anti-catalyst, from coming into contact with the activity point.

There are possible specific forms of the phosphorous compound included in a combustion exhaust gas and chemical compounds adsorbed in the catalyst; examples include chemical compounds resulting from oxides, organic compounds, phosphoric acid, phosphates, and metal. The most typical form is oxide ($P_2O_5$); $P_2O_5$ is present in the form of $P_4O_{10}$ (two molecules). The molecule diameter is about 9 Å. By comparison, the molecule diameters of NO, $NH_3$, $O_2$, and other reactants are within a range of 3 to 5 Å.

In the catalyst in the first invention, the average fine hole diameter of fine holes with diameters of 3.4 to 14 Å that are measured in a gas adsorption method in which fine holes with diameters of 3.4 to 14 Å are measured or a fine hole diameter calculated from a crystal structure is 8 to 9 Å, and active ingredient is supported in these fine holes, so the reactants can enter the fine holes but the phosphorous compound, which is a poisoning substance, cannot enter the fine holes, suppressing deterioration of the active ingredient due to the poisoning.

In a catalyst in which its molecule diameter is smaller than 8 Å and greater than 3 to 5 Å, the molecule diameter of the poisoning substance is larger than the fine hole diameter in the catalyst, so the poisoning substance cannot enter the fine holes in the catalyst. However, part of the cross section at the entrance of the fine hole in the catalyst may be covered with the phosphorous compound or the entrance of the fine hole may be completely blocked. If the entrance of the fine hole is completely blocked, the reactant cannot disperse into the fine holes, deteriorating the catalyst. If part of the cross section at the entrance of the fine hole in the catalyst is covered with the phosphorous compound, the diameter of the remaining opening is highly likely to be smaller than the diameter of the reactant. In this case as well, the catalyst is deteriorated.

By comparison, in a catalyst in which the fine hole diameter is well larger than the molecule diameter of the poisoning substance, the poisoning substance disperses into the fine holes and the active ingredient is poisoned, deteriorating the catalyst. The first invention supports the active ingredient in fine holes having appropriate sizes, so the present invention prevents the phosphorous compound from entering the fine holes and suppresses the catalyst from deteriorating.

The first invention is advantageous in suppression of catalyst deterioration by the phosphorous compound. The present invention can also be applied to treatment of an exhaust gas including not only the phosphorous compound but also volatile metal compounds such as oxides of selenium, tellurium, thallium, arsenic, and the like.

As examples of the above catalyst, example catalysts 1 to 5, in which a catalyst active ingredient was supported in a carrier having fine holes with diameters controlled to 8 to 9 Å, comparative example catalysts 1 to 3, which used a carrier with fine holes with controlled diameters outside the range of 8 to 9 Å, and comparative example catalysts 4 and 5, which used a carrier having fine holes with non-controlled diameters were synthesized. Then, nitrogen oxide removing performance (catalyst activity) was confirmed. Example catalysts 1 to 5 and comparative example catalysts 1 to 5 were manufactured as described below.

Example catalyst 1

Forty grams of powder H-type Y-type zeolite (HSZ-330HAU from Tosoh Corporation, $SiO_2/Al_2O_3$ = 6, fine hole diameter calculated from a crystal structure = 8 Å) was added to a water solution in which 103.6 grams of copper acetate $(Cu(CH_3COO)_2 \cdot H_2O)$ was dissolved in two liters of distilled water, the solution was then stirred for 24 hours at room temperature to support Cu through ion exchange. After the stirring was stopped and left stationary, supernatant fluid was disposed of and distilled water was added to the deposit, after which the deposit was cleaned three times using decantation. The deposit was further cleaned with distilled water while being suction filtered. The powder obtained after the filtration was dried at 120°C and then burned for two hours at 500°C to obtain Cu-Y type zeolite catalyst powder. The amount of supported Cu of this catalyst was determined to be 2.2 wt% in ICP analysis.

Example catalyst 2

Cu-Y type zeolite catalyst powder was prepared in the same way as for example catalyst 1, except that 50.8 grams of copper acetate $(Cu(CH_3COO)_2 \cdot H_2O)$ and 40 grams of powder H-type Y-type zeolite (HSZ-360HAU from Tosoh Corporation, $SiO_2/Al_2O_3$ = 14, fine hole diameter calculated from a crystal structure = 8 Å) were used. The amount of supported Cu of this catalyst was determined to be 1.1 wt% in ICP analysis.

Example catalyst 3

Cu-X type zeolite catalyst powder was prepared in the same way as for example catalyst 1, except that 15.6 grams of copper acetate $(Cu(CH_3COO)_2 \cdot H_2O)$ and 40 grams of powder X-type zeolite (Zeolum F9 from Tosoh Corporation, $SiO_2/Al_2O_3$ = 2.5, fine hole diameter calculated from a crystal structure = 9 Å) were used. The amount of supported Cu of this catalyst was determined to be 5.3 wt% in ICP analysis.

Example catalyst 4

Cu-X type zeolite catalyst powder was prepared in the same way as for example catalyst 1, except that 5.0 grams of copper acetate $(Cu(CH_3COO)_2 \cdot H_2O)$ and 40 grams of powder X-type zeolite (Zeolum F9 from Tosoh Corporation, $SiO_2/Al_2O_3$ = 2.5, fine hole diameter calculated from a crystal structure = 9 Å) were used. The amount of supported Cu of this catalyst was determined to be 1.6 wt% in ICP analysis.

Comparative example catalyst 1

Cu-ZSM-5 catalyst powder was prepared in the same way as for example catalyst 1, except that 25.2 grams of copper acetate $(Cu(CH_3COO)_2 \cdot H_2O)$ and 40 grams of powder H-type ZSM-5 zeolite (CBV-3020 from Zeolyst International, $SiO_2/Al_2O_3$ = 30, fine hole diameter = 5.5 to 6 Å) were used. The amount of supported Cu of this catalyst was determined to be 1.9 wt% in ICP analysis.

Comparative example catalyst 2

Cu mordenite catalyst powder was prepared in the same way as for example catalyst 1, except that 44.7 grams of copper acetate $(Cu(CH_3COO)_2 \cdot H_2O)$ and 40 grams of powder H-type mordenite (HSZ-620HOA from Tosoh Corporation, $SiO_2/Al_2O_3$ = 15, fine hole diameter calculated from a crystal structure = 7 Å) were used. The amount of supported Cu of this catalyst was determined to be 2.2 wt% in ICP analysis.

Comparative example catalyst 3

Cu mordenite catalyst powder was prepared in the same way as for example catalyst 1, except that 25.2 grams of copper acetate $(Cu(CH_3COO)_2 \cdot H_2O)$ and 40 grams of powder H-type mordenite (HSZ-660HOA from Tosoh Corporation, $SiO_2/Al_2O_3$ = 30, fine hole diameter = 7 Å) were used. The amount of supported Cu of this catalyst was determined to be 2.8 wt% in ICP analysis.

Comparative example catalyst 4

One hundred grams of metatitanic acid slurry, 7.8 grams of ammonium paramolybdate, and 2.1 grams of ammonium metavanadate were wet-mixed by a millstone. The resulting slurry was dried at 120°C and then burnt for two hours at 500°C to obtain catalyst powder. This catalyst included titanium oxide, molybdenum oxide, and vanadium oxide with the atomic ratio of metal components Ti:Mo:V being 86:10:4.

Comparative example catalyst 5

Twelve hundred grams of titanium oxide from Ishihara Sangyo Kaisha, Ltd. (with a specific surface area of 250 $m^2$/g), 425 grams of ammonium metatungstate, 810 grams of silica sol (OXS sol from Nissan Chemical Industries, Ltd.), and water were poured into a kneader and mixed for 20 minutes, after which 39.9 grams of ammonium metavanadate was added and the resulting mixture was mixed for 20 minutes, and further mixed for 30 minutes while 320 grams of silica alumina-based ceramic fiber from Toshiba FineSlex Co., Ltd. was gradually added to obtain catalyst paste with a moisture of 29%. The obtained paste was placed on a substrate produced by adding a metal lath to a SUS430 steel plate 0.2 mm in thickness. The plate was then sandwiched between two polyethylene sheets, and pressed by a pair of pressurizing rollers to apply the paste in the mesh of the metal lath substrate and on its surface. The paste was wind dried and then dried for two hours at 500°C to prepare a Ti/W/V-based catalyst plate. The amount of catalyst applied to the catalyst plate was 800 grams/$m^2$.

Example catalyst 5

The Cu-Y type zeolite catalyst powder prepared in the method for example catalyst 1, silica sol, and water were kneaded at a weight ratio of 10:20:10 to prepare the slurry. The obtained slurry was applied to both surfaces of plate-like comparative example catalyst 5. The catalyst was dried at 120°C and then burnt at 500°C to obtain a catalyst plate. The amount of Cu-Y type zeolite catalyst applied to the catalyst plate was 100 grams/$m^2$.

Experiment example 1

Treatment of poisoning by phosphorus, in which deterioration by a combustion exhaust gas including a phosphorous compound was simulated, was performed for example catalysts 1 to 4 and comparative example catalysts 1 to 4, and nitrogen oxide removing performance by these catalysts was compared before and after the treatment of poisoning by phosphorus treatment.
Catalyst powder was press-molded and crushed. The crushed catalyst powder was then classified into 10 to 20 meshes (1.7 mm to 870 $\mu$m) to obtain a granular catalyst. The granular catalyst was impregnated with a phosphoric acid solution including phosphorus by an amount equivalent to 4 wt% of the weight of the catalyst, the amount being calculated for $P_2O_5$. The catalyst was left for 30 minutes at room temperature, dried at 120°C, and then burned for two hours at 350°C to obtain a catalyst after the treatment by phosphorus.
Nitrogen oxide removing performance by the catalysts was measured before and after the treatment of poisoning by phosphorus, by using an ordinary-pressure flowing-type reactor, under conditions described below.
1. Gas composition
NO: 200 ppm
$NH_3$: 240 ppm
$CO_2$: 12%
$O_2$: 3%
$H_2O$: 12%
$N_2$: Balance
2. Spatial velocity (SV): 120,000 $h^{-1}$
3. Reaction temperature: 350°C

Table 1 shows the results. The NOx removal rate in Table 1 was calculated according to equation (1).
$$\text{NOx removal rate (\%) = (NOx concentration at entrance -}$$

$$\text{NOx concentration at exit)/NOx concentration at entrance x}$$

$$\text{100 --- (1)}$$

Velocity constant k in a nitrogen oxide removing reaction was calculated according to equation (2).

$$k = \ln(1/(1 - \eta))$$

$$\eta = \text{(NOx concentration at entrance - NOx concentration}$$

$$\text{at exit)/NOx concentration at entrance --- (2)}$$

Deterioration ratio k/k0 is a velocity constant ratio, where k0 is a velocity constant of the catalyst at an initial time (before the treatment of poisoning by phosphorus) and k is a velocity constant of the catalyst after the treatment of poisoning by phosphorus. When k/k0 is 1, there is no catalyst deterioration. The greater the value of k/k0 is, the less the deterioration is.

Fine hole volume distributions of fine holes with diameters of 3.4 to 14 Å were measured for initial catalysts (before treatment of poisoning by phosphorus) of granular example catalysts 1 to 4 and comparative catalysts 1 to 4, which were used for evaluation in experiment example 1, and the average fine hole diameter of fine holes with diameters of 3.4 to 14 Å was obtained. Samples before the nitrogen oxide removing performance measurement were used. A high-precision fully automatic gas adsorption unit (BELSORP36) from BEL Japan, Inc. was used to measure fine hole volumes. Isothermal lines in Ar adsorption at a liquid nitrogen temperature were measured, and measurements were analyzed by the SF method for calculation. Table 1 shows the results. Each value of the fine hole diameters calculated from crystal structures, which are listed in Table 1, is a value obtained from the size of a hollow entrance structure equivalent to a fine hole, the hollow entrance structure being obtained by creating a zeolite crystal structure model. In the results in Table 1, there are differences in initial performance among catalysts, so degrees of deterioration due to poisoning by phosphorus were compared through deterioration ratio k/k0. Almost no deterioration was found in example catalysts 1 to 4, in which the average fine hole diameter of fine holes with diameters of 3.4 to 14 Å or a fine hole diameter calculated from a crystal structure is within a range of 8 to 9 Å. By comparison, comparative example catalysts 1 to 3, in which the average fine hole diameter of fine holes with diameters of 3.4 to 14 Å or a fine hole diameter calculated from a crystal structure is within the range of 5.5 to 7 Å, showed that the initial performance is high but the deterioration ratio is smaller than 0.6, indicating that deterioration due to poisoning by phosphorus is large. Accordingly, the catalyst in the present invention has high resistance to poisoning by phosphorus, which is a catalyst poisoning substance. Although the average fine hole diameter of fine holes with diameters of 3.4 to 14 Å was 9 Å in comparative example catalyst 4, its deterioration ratio is as small as 0.47, indicating that deterioration due to poisoning by phosphorus is large. The reason for the large deterioration in comparative example 4 will be described in experiment example 3.

[Table 1]

Table 1

| | Catalyst | Amount of supported Cu (wt%) | Fine hole diameter calculated from crystal structure (Å) | Average hole diameter of fine holes with diameters of 3.4 to 14 Å (Å) | NOx removal rate (%) | | Velocity constant | | Deterioration ratio $k/k_0$ |
|---|---|---|---|---|---|---|---|---|---|
| | | | | | Initial | After treatment of poisoning by phosphorus | Initial ($k_0$) | After treatment of poisoning by phosphorus (k) | |
| Example catalyst 1 | Cu-Y zeolite | 2.2 | 8 | 8 | 54.8 | 62.6 | 0.79 | 0.98 | 1.24 |
| Example catalyst 2 | Cu-Y zeolite | 1.1 | 8 | 8 | 23.6 | 23.8 | 0.27 | 0.27 | 1.01 |
| Example catalyst 3 | Cu-X zeolite | 5.3 | 9 | 7 | 48.3 | 49.8 | 0.66 | 0.69 | 1.04 |
| Example catalyst 4 | Cu-X zeolite | 1.6 | 9 | 7 | 37.8 | 32.0 | 0.47 | 0.39 | 0.81 |
| Comparative example catalyst 1 | Cu-ZSM-5 | 1.9 | 5.5-6 | 7 | 97.0 | 77.9 | 3.50 | 1.51 | 0.43 |
| Comparative example catalyst 2 | Cu mordenite | 2.2 | 7 | 7 | 98.5 | 68.6 | 4.18 | 1.16 | 0.28 |
| Comparative example catalyst 3 | Cu mordenite | 2.8 | 7 | 7 | 98.4 | 91.8 | 4.15 | 2.50 | 0.60 |
| Comparative example catalyst 4 | $TiO_2$-$MoO_3$-$V_2O_5$ | - | - | 9 | 78.5 | 51.3 | 1.54 | 0.72 | 0.47 |

Experiment example 2

Example catalyst 1 and comparative example catalyst 3 were molded into granular catalysts in the same way as in experiment example 1, after which treatment of poisoning by phosphorus was performed to compare nitrogen oxide removing performance of these catalysts before and after the treatment of poisoning by phosphorus. The amount of poisoning by phosphorus was 8 wt% of the weight of the catalyst, the amount being calculated for $P_2O_5$. The nitrogen oxide removing performance of the catalysts before and after the treatment of poisoning by phosphorus was measured under the same conditions as in experiment example 1. Table 2 shows the results.

Although the amount of poisoning by phosphorus was larger than in experiment example 1, deterioration of example catalyst 1 was small. By comparison, remarkable deterioration in activity was found in comparative example catalyst 3. Accordingly, it is found that the catalyst in the present invention has high resistance to poisoning by phosphorus.

[Table 2]

Table 2

| | Catalyst | NOx removal rate (%) | | Velocity constant | | Deterioration ratio $k/k_0$ |
|---|---|---|---|---|---|---|
| | | Initial | After treatment of poisoning by phosphorus | Initial ($k_0$) | After treatment of poisoning by phosphorus (k) | |
| Example catalyst 1 | Cu-Y zeolite | 54.8 | 52.7 | 0.79 | 0.75 | 0.94 |
| Comparative example catalyst 3 | Cu mordenite | 98.4 | 48.7 | 4.15 | 0.67 | 0.16 |

Experiment example 3

Fine hole distributions and fine hole volumes were measured for initial catalysts (before treatment of poisoning by phosphorus) of granular example catalysts 1 and 2 and comparative example catalysts 1 to 4, which were used for evaluation in experiment example 1. In the measurement, samples before the nitrogen oxide removing performance measurement were used. In measurement of fine hole distributions and fine hole volumes of fine holes with diameters of 3.4 to 14 Å, a high-precision fully automatic gas adsorption unit (BELSORP36) from BEL Japan, Inc. was used. Isothermal lines in Ar adsorption at a liquid nitrogen temperature were measured, and measurements were analyzed by the SF method for calculation. In total fine hole volume measurement, the ASAP2010 from Shimadzu Corporation was used. Isothermal lines in $N_2$ adsorption at a liquid nitrogen temperature were measured in a nitrogen gas adsorption method in which fine holes with diameters of 10 to 3000 Å are measured, so as to obtain total fine hole volumes.

Table 3 shows the results. For example catalyst 1, which showed high resistance in experiment example 1, the volume of fine holes with diameters of 7 to 10 Å occupied as large as 67.8% of the volume of all fine holes with diameters of 3.4 to 14 Å, which were obtained from the fine hole distribution of fine holes with diameters of 3.4 to 14 Å. For example catalyst 2, which showed high resistance in experiment example 1, the volume of fine holes with diameters of 7 to 10 Å also occupied as large as 75%. By comparison, for comparative example catalysts 1 to 4, which showed large deterioration in experiment example 1, the ratio occupied by the volume of fine holes with diameters of 7 to 10 Å did not reach 50%. Accordingly, it is found that the catalyst in the present invention has high resistance to deterioration due to poisoning by phosphorus. It is also found that for example catalysts 1 and 2, which showed high resistance in experiment example 1, fine holes with diameters of 7 to 10 Å, which were measured in a gas adsorption method in which fine holes with diameters of 3.4 to 14 Å are measured, occupied as large as 30.2% and 28.7% of the total fine hole volumes in the catalysts. For comparative example catalyst 4, the volume of fine holes with diameters of 7 to 10 Å only occupied 36% of the total volume of fine holes with diameters of 3.4 to 14 Å, and the volume of fine holes with diameters of 7 to 10 Å only occupied 3.4% of the volume of all fine holes in the catalyst. Since these values are small, deterioration due to poisoning by phosphorus is large.

[Table 3]

Table 3

| | Catalyst | Fine hole volume (ml/g) | | (2)/(1) x 100 (%) | (3) Total fine hole volume (ml/g) | (2)/(3) x 100 (%) |
| | | (1) Fine hole diameters of 3.4 to 14 Å | (2) Fine hole diameters of 7 to 10 Å | | | |
|---|---|---|---|---|---|---|
| Example catalyst 1 | Cu-Y zeolite | 0.139 | 0.094 | 67.6 | 0.311 | 30.2 |
| Example catalyst 2 | Cu-Y zeolite | 0.161 | 0.121 | 75.0 | 0.422 | 28.7 |
| Comparative example catalyst 1 | Cu-ZSM-5 | 0.095 | 0.037 | 38.5 | 0.212 | 17.3 |
| Comparative example catalyst 2 | Cu mordenite | 0.119 | 0.046 | 38.5 | 0.214 | 21.5 |
| Comparative example catalyst 3 | Cu mordenite | 0.113 | 0.047 | 41.6 | 0.231 | 20.3 |
| Comparative example catalyst 4 | $Tio_2-MoO_3-V_2O_5$ | 0.025 | 0.009 | 36.0 | 0.261 | 3.4 |

Experiment example 4

Treatment of poisoning by phosphorus, in which deterioration by a combustion exhaust gas including a phosphorous compound was simulated, was performed for example catalyst 5 and comparative example catalyst 5, and nitrogen oxide removing performance by these catalysts was compared before and after the treatment of poisoning by phosphorus treatment. A catalyst plate was impregnated with a phosphoric acid solution including phosphorus by an amount equivalent to 4 wt% of the weight of the catalyst, the amount being calculated for $P_2O_5$. The catalyst plate was left for 30 minutes at room temperature, dried at 120°C, and then burned for two hours at 350°C to obtain a catalyst after the treatment of poisoning by phosphorus.

Nitrogen oxide removing performance by the catalysts was measured before and after the treatment of poisoning by phosphorus, by using an ordinary-pressure flowing-type reactor, under the conditions described below.

1. Gas composition
NO: 200 ppm
$NH_3$: 240 ppm
$CO_2$: 12%
$O_2$: 3%
$H_2O$: 12%
$SO_2$: 500 ppm
$N_2$: Balance
2. AV: 51 m/h
3. Reaction temperature: 350°C

Table 4 shows the results. The example catalyst 5, produced by coating the top layer (surface layer) of a conventional catalyst with the catalyst in the present invention, showed less deterioration after poisoning treatment than the comparative example catalyst. These results demonstrate that deterioration can be reduced by coating the top layer (surface layer) of a conventional catalyst with the catalyst in the present invention.

[Table 4]

Table 4

|  | NOx removal rate (%) | | Velocity constant | | Deterioration ratio $k/k_0$ |
|---|---|---|---|---|---|
|  | Initial | After treatment of poisoning by phosphorus | Initial ($k_0$) | After treatment of poisoning by phosphorus (k) | |
| Example catalyst 5 | 66.0 | 42.0 | 1.1 | 0.5 | 0.50 |
| Comparative example catalyst 5 | 70.0 | 36.0 | 1.2 | 0.4 | 0.37 |

Second embodiment

Next, a second invention will be described in detail. There are two types of mesoporous silica: mesoporous silica having two-dimensional through holes, which appear as if long cylinders were placed side by side and mesoporous silica having three-dimensional through holes, the openings of which face in the X, Y, and Z directions. Examples include MCM-41, SBA-15, FMS-16, and MSU-H, each of which has a two-dimensional hexagonal structure, other examples include MCM-48 and SBA-1, each of which has a cubic structure, and another example is MCM-50 with a laminate structure.

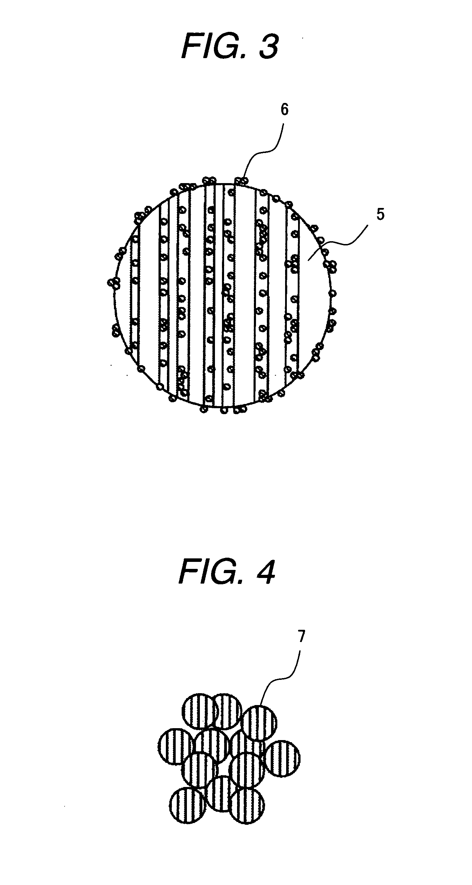

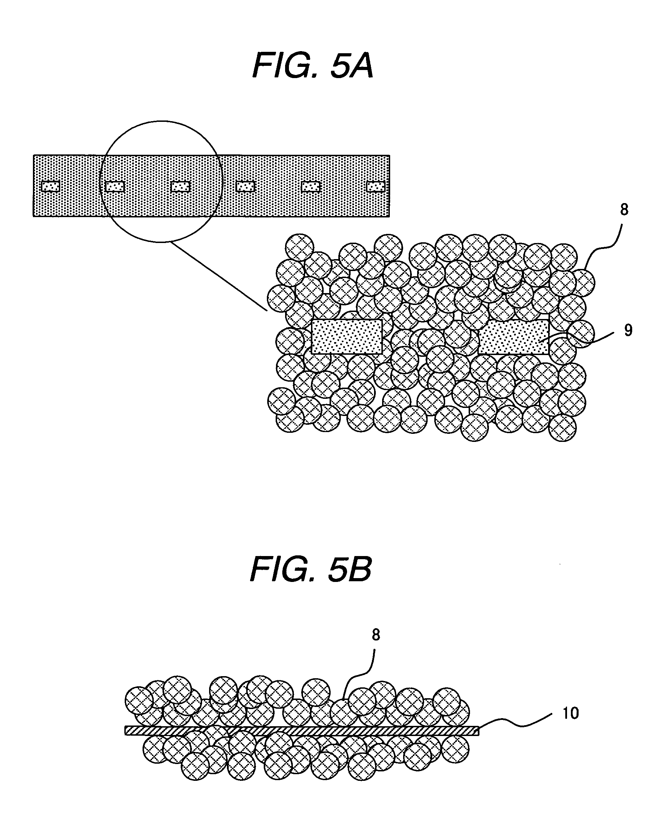

Diameters of through holes in mesoporous silica can be controlled to a substantially fixed size. For MCM-41, for example, the average fine hole diameter of mesoporous silica having regular fine holes is about 40 Å. As shown in FIG. 3, an active ingredient for removing nitrogen oxides was supported in fine holes in mesoporous silica, which have a controlled size, to use the mesoporous silica as a catalyst (primary catalyst particles). In practice, a catalyst having an active ingredient in mesoporous silica includes secondary catalyst particles formed as a result of a plurality of particles adhering, as shown in FIG. 4. When the granular secondary particles are mixed with a binder or the like to form catalyst paste and the paste is applied to a metal mesh, as shown in FIG. 5A, or to a plate-like substrate made of, for example, a SUS plate, as shown in FIG. 5B, to use the mesh or plate as a catalyst plate, the catalyst can be easily set. This type of catalyst is used to remove nitrogen oxides from an exhaust gas including the nitrogen oxides and a phosphorous compound.

The reason why the catalyst in the present invention is less likely to be deteriorated by a phosphorous compound is that an active ingredient is supported in fine holes. When an active ingredient is supported in fine holes in mesoporous silica having the above 40-Å diameter, the average fine hole diameter of catalyst particles is larger than the molecule diameter 9 Å of the phosphorous compound, which is a poisoning substance. However, the fine hole diameter is not much larger than the molecule diameter of the phosphorous compound, so the phosphorous compound, which is used as a poisoning substance, is less likely to reach the center of the opening of a fine hole; the phosphorous compound just covers part of the cross section of the entrance of the fine hole, and does not easily enter the fine hole. Since the phosphorous compound has a larger diameter than the fine hole, the phosphorous compound does not completely block the entrance of the fine hole, the reactant can disperse into the interior of the fine hole through the clearance between the phosphorous compound and the fine hole. Accordingly, the catalyst has higher resistance to poisoning by phosphorus than a catalyst in which an active ingredient is supported in fine holes having sufficiently large diameters.

An active ingredient for removing nitrogen oxides is supported in fine holes in mesoporous silica to use it as a catalyst. In this case, the active ingredient supported in the fine holes may be dispersed as fine particles, as shown in FIG. 3, or may be supported on the inner walls of the fine holes as thin films. When a catalyst that is less likely to be deteriorated by a phosphorous compound is formed, it is important to support an active ingredient in fine holes.

When primary particles in an embodiment described below were observed through an electron microscope, the diameters of primary particles in a nitrogen oxide removing catalyst that uses mesoporous silica as the carrier were within a range of 150 to 300 nm. Since mesoporous silica is a porous substance shaped like a bundle of cylinders, a gas disperses easier as the length of the fine hole is shortened and full performance of the catalyst can be obtained easier. At the same time, the phosphorous compound enters the fine holes with ease, so durability is more improved as the length of the fine hole is prolonged. The diameters of secondary particles in a nitrogen oxide removing catalyst are

13

preferably within a range of 2 to 80 μm. This is because a secondary particle is formed by making a plurality of primary particles adhere to one another, and when openings in the mesoporous silica appear on the surface, catalyst activity can be fully obtained. Even when mesoporous silica having a small average particle diameter is used, particles may coagulate in a process of supporting titanium and vanadium. As a result, the average particle diameter of the catalyst may become large. When the average particle diameter is larger than 80 μm, the opening at the entrance of the fine hole in the mesoporous silica becomes small and thus catalyst activity and resistance to poisoning by phosphorus are lowered.

A nitrogen oxide removing catalyst preferably has an average fine hole diameter within a range of 20 to 40 Å when a fine hole distribution of catalyst aggregates formed from secondary particles is measured by a nitrogen adsorption method, the average fine hole diameter representing the maximum value of differential volumes in the fine hole distribution of the catalyst. When the fine hole is too large, poisoning by the phosphorous compound occurs; when the fine hole is too small, the active ingredient is reduced. In the nitrogen adsorption method, fine holes with diameters of 10 to 3000 Å can be measured. Therefore, when fine holes with diameters of 10 to 3000 Å are measured, the average fine hole diameter, which indicates the maximum value of differential volumes in the fine hole distribution of the catalyst, should fall within a range of 20 to 40 Å. The fine holes with an average fine hole diameter within a range of 20 to 40 Å are larger than the poisoning substance (an oxide of phosphorus) with a molecule diameter of 9 Å. However, the poisoning substance is less likely to reach the center of the opening of a fine hole, so the poisoning substance does not easily enter a fine hole even when the fine hole has a diameter of 20 to 40 Å, increasing resistance to poisoning by phosphorus. When, however, the average fine hole diameter, indicating the maximum value of differential volumes in the fine hole distribution, becomes larger than 40 Å, it is larger than the molecule diameter of the oxide of phosphorus, which is a poisoning substance. Accordingly, even when an active ingredient is supported in fine holes in a material having controlled fine hole diameters, phosphorus can enter these fine holes, lessening the effect of suppressing poisoning by phosphorus. A desired fine hole diameter also depends on the amount of active ingredient supported in the mesoporous silica. To prepare a catalyst that has an average fine hole diameter less than 20 Å, the average fine hole diameter indicating the maximum value of differential volumes in the fine hole distribution of the catalyst, by supporting an active ingredient in fine holes in mesoporous silica, a large amount of active ingredient must be supported in the fine holes. This type of catalyst is not easily prepared because, for example, fine holes are blocked in a manufacturing process.

Secondary particles of mesoporous silica used to provide a catalyst having particle diameters described above have an average diameter of 2 to 10 μm. As with the secondary particles of the catalyst, mesoporous silica is also an aggregation of small primary particles. When the average particle diameter is 10 μm or less, that is, the secondary particle diameters of mesoporous silica are small, an area by which each fine hole in the mesoporous silica is exposed at its entrance is increased, effectively supporting the active ingredient in the fine holes and thereby making the catalyst highly resistant to poisoning by phosphorus. Since after the active ingredient has been supported, the average particle diameter of the catalyst is also reduced, the surface area is also enlarged and the contact efficiency of a reactive gas in the nitrogen oxide removing reaction is increased, increasing catalyst activity. When the average particle diameter of the mesoporous silica is adequately large, the active ingredient cannot disperse up to the back of the secondary particles in the active ingredient supporting process, making it difficult to support the active ingredient in the fine holes. The diameters of the primary particles in the mesoporous silica are preferably 300 nm or less. When the active ingredient is supported in the fine holes in the mesoporous silica, the reactant must disperse into the fine holes. The shorter the distance between the entrance and the exit is, that is, the smaller the primary particle diameter is, the shorter the diffusion time is, increasing the reaction activity. This increase is caused due to the same reason for the diameter of the primary particle of the catalyst. The average fine hole diameter of the mesoporous silica before the catalyst is supported is preferably within a range of 20 to 70 Å. When the fine hole diameter is large, even if the active ingredient is supported in the fine holes, the fine hole diameter is still large enough for phosphorus, which is a poisoning substance, to enter the fine hole, making it impossible to suppress poisoning by phosphorus.

When a catalyst including titanium and vanadium is used, if an ammonia denitration reaction is caused, the catalyst active ingredient supported in mesoporous silica has high activity. A desirable content of titanium is 18.0 to 60.0 wt% of the entire active ingredient when the content is calculated for its oxide ($TiO_2$). $TiO_2$ has ammonia denitration reaction activity, and also functions as a carrier that disperses vanadium. When the amount of supported $TiO_2$ is less than 18 wt%, the interiors of the fine holes and surface of the mesoporous silica cannot be fully covered by $TiO_2$ and thereby vanadium cannot disperse on $TiO_2$, lowering the nitrogen oxide removing performance. When the amount of supported $TiO_2$ exceeds 60.0 wt%, the carrier material having fine holes with controlled diameters does not effectively function because, for example, $TiO_2$ blocks the fine holes in the mesoporous silica. A desirable content of vanadium is 1.0 to 17 wt% when the content is calculated for its oxide ($V_2O_5$). The content of vanadium is preferably 1.0 to 12 wt% when the content is calculated for $V_2O_5$. When the amount of supported $V_2O_5$ is less than 1 wt%, the amount of active ingredient is small and the nitrogen oxide removing performance is inadequate. When the amount of supported $V_2O_5$ exceeds 17 wt%, the vanadium oxide particle becomes large and thereby dispersion is worsened, lowering the nitrogen oxide removing performance. When the amount of supported $V_2O_5$ is much larger than 17 wt%, the carrier material having fine holes with controlled diameters does not effectively function because, for example, $V_2O_5$ blocks the fine holes in the mesoporous silica.

When the ratio between the titanium content and the vanadium content is calculated by weight for their oxides, a desirable weight ratio $V_2O_5/TiO_2$ is 0.07 to 0.60. Particularly, an optimum weight ratio is 0.18 to 0.45. When $V_2O_5/TiO_2$ is less than 0.1, which is the content of $V_2O_5$ is very small, the amount of active ingredient is small and thereby the nitrogen oxide removing performance is inadequate. When $V_2O_5/TiO_2$ is greater than 0.6, that is the content of $V_2O_5$ is very large with respect to $TiO_2$, the vanadium oxide particle becomes large and thereby dispersion is worsened, lowering the nitrogen oxide removing performance. Vanadium included in the active ingredient is a combination of tetravalent vanadium and pentavalent vanadium. A desirable mole ratio $V^{4+}/V^{5+}$ between tetravalent vanadium and pentavalent vanadium is 0.5 to 0.7. This is because it is preferable for both tetravalent vanadium and pentavalent vanadium to be present together and the catalyst activity is high when the amount of pentavalent vanadium is a little larger than the amount of tetravalent vanadium. In a nitrogen oxide removing reaction in which $NH_3$ is used as the reducing agent, it is known that $NH_3$ is adsorbed in the OH-group of tetravalent vanadium.

When $V^{4+}/V^{5+}$ is within a range of 0.5 to 0.7, the nitrogen oxide removing catalyst effectively functions.

As with vanadium, active ingredients having nitrogen oxide removing activity include molybdenum, tungsten, iron, manganese, and other metals. These metals may be added to titanium and vanadium catalyst active ingredients as an additional active ingredient.

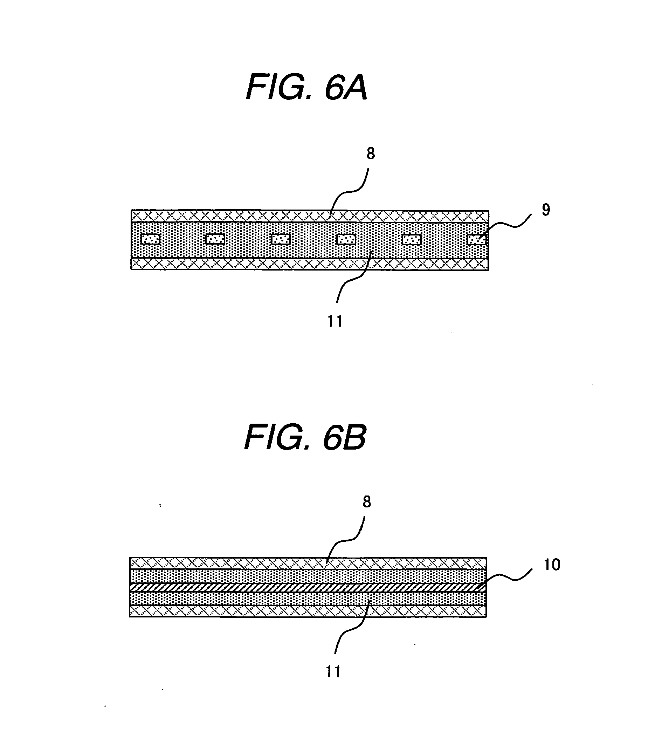

On a catalyst plate, the catalyst in the present invention may be used together with another type of nitrogen oxide removing catalyst. To achieve desired performance, a plurality of types of catalysts may be laminated as a catalyst plate, as shown in FIGs. 6A and 6B. In this case, it is advisable to place the nitrogen oxide removing catalyst in the present invention as the outermost layer (topmost layer). This arrangement can prevent the other nitrogen oxide removing catalysts, which are inner catalysts, from being poisoned by a phosphorous compound.

Any supporting method can be used as a method of supporting titanium and vanadium, which are active ingredients, in mesoporous silica if an active ingredient can be introduced into fine holes. Examples include an impregnation method, an evaporating, drying, and solidifying method, a kneading method, and a thermolytic molecular precursor (TMP) method. Of these, the TMP method is effective in reliably supporting the active ingredient in fine holes because metal alkoxide including a metal element to be supported and the surface hydroxyl group of mesoporous silica mutually react to form a precursor.

$TiO_2$ sol, hydrosulfate, chlorides, oxalate, titanium ammonium citrate 4-hydrate, and metal alkoxides including titanium and the like, such as titanium tetraisopropoxide, can be used as raw materials of titanium. Titanium hydroxide or a sol solution including $TiO_2$ obtained by hydrolyzing, for example, metal alkoxide including titanium by a so-called sol-gel method can also be used.

Ammonium salt, oxalate, hydrosulfate, oxides, and metal alkoxides including vanadium, such as vanadium (V) tri-n-butoxide oxide can be used as raw materials of vanadium. When molybdenum, tungsten, iron, manganese, or another element having nitrogen oxide removing activity is added besides titanium and vanadium, an oxide, ammonium salt, oxalate, hydrosulfate, nitrate, metal alkoxide, and the like can be used as raw materials.

As examples of the above catalyst, example catalysts 6 to 19, in which titanium and vanadium used as active ingredients were supported in mesoporous silica used as a carrier were synthesized, and comparative example catalysts 6 to 8, in which mesoporous silica was not used as a carrier were also synthesized. Nitrogen oxide removing performance (catalyst activity) of these catalysts was confirmed. Example catalysts 6 to 19 and comparative example catalysts 6 to 8 were manufactured as described below.

Example catalyst 6

Titanium tetraisopropoxide was dissolved in n-decane to prepare an 80 wt% solution of titanium tetraisopropoxide. Twenty grams of mesoporous silica (MCM-41 from Nippon Chemical Industrial Co., Ltd., average particle size = 60 μm) was dried in the air for two hours at 120°C in a globe box under a flow of a nitrogen gas, after which the mesoporous silica was impregnated with 105 grams of this solution and then left for 30 minutes. An excessive solution was filtered with a filter. Next, the solid matter obtained by the filtration was added to one liter of distilled water and the resulting solution was stirred for 24 hours at room temperature to hydrolyze titanium tetraisopropoxide. The solution was suction filtered with a suction filter. The solid matter obtained by the filtration was then dried at 120°C and burnt for two hours at 500°C in the air. Then, 2.57 grams of $NH_4VO_3$ was dissolved in a hydrogen peroxide solution and the resulting solution was adjusted to an amount equivalent to the amount of adsorbed water. Eighteen grams of powder obtained was impregnated with the solution and left for 30 minutes. The powder is then dried at 120°C and burnt for two hours at 500°C in the air, producing a complete catalyst powder.

Example catalyst 7

Titanium was supported in mesoporous silica by the TMP method. Specifically, 15 grams of mesoporous silica (MCM-41 from Nippon Chemical Industrial Co., Ltd., average particle size = 60 $\mu$m) was placed in a Schrenck eggplant-shaped flask. The flask was then connected to a Schrenck line, and heated to 180°C in an oil bath, after which the flask was subject to vacuum drying for five hours. A nitrogen gas was supplied into the eggplant-shaped flask. Then 110 cc of dehydrated tetrahydrofuran and 2.98 grams of titanium tetraisopropoxide were added under a flow of nitrogen gas. The resulting mixed solution was stirred for 15 hours at room temperature under the nitrogen gas flow. Upon completion of the stirring, the eggplant-shaped flask was left stationary to have the solid matter settle, after which the supernatant fluid was removed with an injector. The solid matter left in the eggplant-shaped flask was vacuum-dried for five hours at room temperature by using a Schrenck line. The resulting dried powder was dried for two hours at 150°C in the atmosphere. Finally, the powder was burnt for two hours at 500°C in the atmosphere. This process was repeated four times. As a result, $TiO_2$ was supported in the mesoporous silica by 20 wt%.
Then, 1.02 grams of $NH_4VO_3$ was dissolved in a hydrogen peroxide solution and the resulting solution was adjusted to an amount equivalent to the amount of adsorbed water. Fifteen grams of powder obtained was impregnated with the solution and left for 30 minutes. The powder is then dried at 120°C and burnt for two hours at 500°C in the air, producing a complete catalyst powder.

Example catalyst 8

29.6 grams of titanium ammonium citrate 4-hydrate (TAS-FINE from Furuuchi Chemical Corporation, Ti content = 20%) was dissolved in 120 grams of distilled water. The solution and 20 grams of mesoporous silica (MCM-41 from Nippon Chemical Industrial Co., Ltd., average particle size = 60 $\mu$m), which was dried for two hours at 120°C in the air in advance, were mixed. The mixture was placed on an evaporating dish. The mixture was stirred while being heated on a hot plate heated to 200°C for evaporation. The resulting powder is burnt for two hours at 500°C in the air.
Then, vanadium was supported in the powder in the TMP method. The 15 grams of the resulting powder was placed in a Schrenck eggplant-shaped flask. The flask was then connected to a Schrenck line, and heated to 180°C in an oil bath, after which the flask was subject to vacuum drying for five hours. A nitrogen gas was supplied into the eggplant-shaped flask. Then 110 cc of dehydrated tetrahydrofuran and 3.3 grams of vanadium tri-n-butoxide oxide were added under a flow of nitrogen gas. The resulting mixed solution was stirred for 15 hours at room temperature under the nitrogen gas flow. Upon completion of the stirring, the eggplant-shaped flask was left stationary to have the solid matter settle, after which the supernatant fluid was removed with an injector. The solid matter left in the eggplant-shaped flask was vacuum-dried for five hours at room temperature by using a Schrenck line. The resulting dried powder was dried for two hours at 150°C in the atmosphere. Finally, the powder was burnt for two hours at 500°C in the atmosphere, producing a complete catalyst. As a result, vanadium was supported by 6 wt%, the amount being calculated for $V_2O_5$.

Example catalyst 9

Titanium was supported in mesoporous silica by the TMP method in the same way as for example catalyst 7, three times, except that the amount of titanium tetraisopropoxide in example catalyst 7 was changed; 11.08 grams in a first supporting operation and 7.82 grams in second and third supporting operations. Finally, $TiO_2$ was supported in the mesoporous silica by 33 wt%.
Then, 1.23 grams of $NH_4VO_3$ was dissolved in a hydrogen peroxide solution and the resulting solution was adjusted to an amount equivalent to the amount of adsorbed water. Fifteen grams of powder obtained was impregnated with the solution and left for 30 minutes. The powder is then dried at 120°C and burnt for two hours at 500°C in the air, producing a complete catalyst powder.

Example catalyst 10

86.7 grams of titanium ammonium citrate 4-hydrate (TAS-FINE from Furuuchi Chemical Corporation, Ti content = 20%) was dissolved in 120 grams of distilled water. The solution and 20 grams of mesoporous silica (MCM-41 from Nippon Chemical Industrial Co., Ltd., average particle size = 60 $\mu$m), which was dried for two hours at 120°C in the air in advance, were mixed. The mixture was placed on an evaporating dish. The mixture was stirred while being heated on a hot plate heated to 200°C for evaporation. The resulting powder is burnt for two hours at 500°C in the air.
Then, 3.51 grams of $NH_4VO_3$ was dissolved in a hydrogen peroxide solution and the resulting solution was adjusted to an amount equivalent to the amount of adsorbed water. Twenty grams of powder obtained was impregnated with the solution and left for 30 minutes. The powder is then dried at 120°C and burnt for two hours at 500°C in the air, producing a complete catalyst powder.

Example catalyst 11

Preparation was performed in the same way as for example catalyst 10, except that the amount of titanium ammonium citrate 4-hydrate is 73.3 grams and the amount of $NH_4VO_3$ was 3.3 grams.

Example catalyst 12

Titanium was supported in mesoporous silica in the same way as for example catalyst 11. Then, 15 grams of powder obtained was used to support vanadium in the TMP method in the same way as for example catalyst 8.

Furthermore, 1.91 grams of $NH_4VO_3$ was dissolved in a hydrogen peroxide solution and the resulting solution was adjusted to an amount equivalent to the amount of adsorbed water. Fifteen grams of powder obtained was impregnated with the solution and left for 30 minutes. The powder is then dried at 120°C and burnt for two hours at 500°C in the air, producing a complete catalyst powder.

Example catalyst 13

Catalyst powder in which titanium and vanadium were supported in mesoporous silica was obtained in the same way as for example catalyst 10, except that the amount of titanium ammonium citrate 4-hydrate was 49.1 grams.

Example catalyst 14

Mesoporous silica (MCM-41 from Nippon Chemical Industrial Co., Ltd., average particle size = 60 $\mu$m) was wet-crushed by using a planetary ball mill to obtain mesoporous silica with an average particle diameter of 5.6 $\mu$m. Catalyst powder in which titanium and vanadium were supported in mesoporous silica was obtained in the same way as for example catalyst 13, except that mesoporous silica with an average particle diameter of 5.6 $\mu$m was used.

Example catalyst 15

Powder in which titanium was supported in mesoporous silica was obtained in the same way as for example catalyst 13, except that mesoporous silica with an average particle diameter of 3.2 $\mu$m was used.

Next, 1.32 grams of $MoO_3$ powder and 1.46 grams of $NH_4VO_3$ were dissolved in 14.6 grams of distilled water to obtain a solution including water-soluble compounds in the method described in Japanese Patent Laid-open 2000-308832, the solution being expressed by a rational formula $(NH_4)xMO_2VxO(3x + 6)$. Eighteen grams of powder prepared in advance was impregnated with this solution. The powder was then dried at 120°C and burnt for two hours at 500°C in the air, producing a catalyst powder in which titanium, vanadium, and molybdenum were supported.

Example catalyst 16

Powder in which titanium was supported in mesoporous silica was obtained in the same way as for example catalyst 13, except that mesoporous silica with an average particle diameter of 5.6 $\mu$m was used.

Catalyst powder in which titanium, vanadium, and molybdenum were supported in mesoporous silica, was obtained in the same way as for example catalyst 15, except that 1.88 grams of $MoO_3$ powder and 2.08 grams of $NH_4VO_3$ were dissolved in 20 grams of distilled water.

Example catalyst 17

Catalyst powder in which titanium, vanadium, and molybdenum were supported in mesoporous silica, was obtained in the same way as for example catalyst 15, except that 3.34 grams of $MoO_3$ powder and 3.14 grams of $NH_4VO_3$ were dissolved in 28 grams of distilled water.

Example catalyst 18

Catalyst powder in which titanium, vanadium, and molybdenum were supported in mesoporous silica, was obtained in the same way as for example catalyst 15, except that 0.7 grams of $MoO_3$ powder and 0.78 grams of $NH_4VO_3$ were dissolved in 16 grams of distilled water.

Example catalyst 19

Catalyst powder in which titanium, vanadium, and molybdenum were supported in mesoporous silica, was obtained in the same way as for example catalyst 15, except that 2.12 grams of $MoO_3$ powder and 2.34 grams of $NH_4VO_3$ were dissolved in 18 grams of distilled water.

Comparative example catalyst 6

Twenty grams of $TiO_2$ powder (G5 from Rhone-Poulenc, specific surface area = 330 $m^3/g$) was impregnated with a solution obtained by dissolving 1.54 grams of $NH_4VO_3$ in 30 grams of hydrogen peroxide solution, and the powder was left for 30 minutes. The powder was then dried at 120°C and burnt for two hours at 500°C in the air, producing a catalyst powder in which vanadium was supported in $TiO_2$.

Comparative example catalyst 7

Catalyst powder in which in which vanadium was supported in $TiO_2$ was obtained in the same way as for comparative example catalyst 6, except that 3.51 grams of $NH_4VO_3$ was used.

Comparative example catalyst 8

Ten grams of powder prepared by using comparative example catalyst 6 and 10 grams of mesoporous silica (MCM-41 from Nippon Chemical Industrial Co., Ltd., average particle size = 60 $\mu$m) were mixed in an agate mortar to obtain a complete catalyst powder.

Experiment example 5

Treatment of poisoning by phosphorus, in which deterioration by a combustion exhaust gas including a phosphorous compound was simulated, was performed for example catalysts 6 to 19 and comparative example catalysts 4 and 6 to 8, in the same way as in experiment example 1. Then nitrogen oxide removing performance by these catalysts was compared before and after the treatment of poisoning by phosphorus treatment.
Table 5 shows the results together with the compositions of the evaluated catalysts. In the table, mesoporous silica is denoted MPS.

[Table 5]

Table 5

| | Catalyst | Average particle diameter of MPS ($\mu$m) | Content | | | | NOx removal rate (%) | | Velocity constant | | k/k$_o$ |
|---|---|---|---|---|---|---|---|---|---|---|---|
| | | | TiO$_2$ (wt%) | V$_2$O$_3$ (wt%) | MPS (wt%) | V$_2$O$_3$/TiO$_2$ (g/g) | Initial | After treatment of poisoning by phosphorus | Initial k$_o$ | After treatment of poisoning by phosphorus (k) | |
| Example catalyst 6 | MPS-TiO$_2$-V$_2$O$_3$ | 60 | 45 | 10 | 45 | 0.222 | 88.4 | 49.7 | 1.15 | 0.69 | 0.60 |
| Example catalyst 7 | MPS-TiO$_2$-V$_2$O$_3$ | 60 | 19 | 5 | 76 | 0.263 | 29.3 | 26.3 | 0.35 | 0.31 | 0.88 |
| Example catalyst 8 | MPS-TiO$_2$-V$_2$O$_3$ | 60 | 31 | 6 | 63 | 0.194 | 35.0 | 34.0 | 0.43 | 0.42 | 0.97 |
| Example catalyst 9 | MPS-TiO$_2$-V$_2$C$_3$ | 60 | 31 | 6 | 63 | 0.194 | 24.0 | 23.3 | 0.27 | 0.27 | 0.97 |
| Example catalyst 10 | MPS-TiO$_2$-V$_2$O$_3$ | 60 | 57 | 12 | 31 | 0.211 | 67.0 | 53.0 | 1.11 | 0.76 | 0.68 |
| Example catalyst 11 | MPS-TiO$_2$-V$_2$O$_3$ | 60 | 47 | 15 | 38 | 0.319 | 73.0 | 54.0 | 1.31 | 0.78 | 0.59 |
| Example catalyst 12 | MPS-TiO$_2$-V$_2$O$_3$ | 60 | 47 | 15 | 38 | 0.319 | 64.0 | 56.0 | 1.02 | 0.82 | 0.80 |
| Example catalyst 13 | MPS-TiO$_2$-V$_2$O$_3$ | 60 | 40 | 12 | 48 | 0.300 | 69.8 | 52.5 | 1.20 | 0.74 | 0.62 |
| Example catalyst 14 | MPS-TiO$_2$-V$_2$O$_3$ | 5.6 | 40 | 12 | 48 | 0.300 | 72.5 | 53.2 | 1.29 | 0.76 | 0.59 |
| Example catalyst 15 | MPS-TiO$_2$-V$_2$O$_3$ MoO$_3$ | 3.2 | 40 | 5.6 | 48 | 0.140 | 63.7 | 55.1 | 1.01 | 0.80 | 0.79 |
| Example catalyst 16 | MPS-TiO$_2$-V$_2$O$_3$ MoO$_3$ | 5.6 | 38 | 7.5 | 46 | 0.197 | 61.8 | 52.5 | 0.96 | 0.74 | 0.77 |

(continued)

| | Catalyst | Average particle diameter of MPS ($\mu$m) | Content | | | | NOx removal rate (%) | | Velocity constant | | k/k$_o$ |
|---|---|---|---|---|---|---|---|---|---|---|---|
| | | | TiO$_2$ (wt%) | V$_2$O$_3$ (wt%) | MPS (wt%) | V$_2$O$_3$/TiO$_2$ (g/g) | Initial | After treatment of poisoning by phosphorus | Initial k$_o$ | After treatment of poisoning by phosphorus (k) | |
| Example catalyst 17 | MPS-TiO$_2$-V$_2$O$_3$ MoO$_3$ | 5.6 | 34 | 10.3 | 41 | 0.303 | 58.7 | 52.9 | 0.88 | 0.75 | 0.85 |
| Examples catalyst 18 | MPS-TiO$_2$-V$_2$O$_3$ MoO$_3$ | 5.6 | 42 | 3.2 | 51 | 0.076 | 43.1 | 44.1 | 0.56 | 0.58 | 1.03 |
| Example catalyst 19 | MPS-TiO$_2$-V$_2$O$_3$ MoO$_3$, | 5.6 | 37 | 8.3 | 45 | 0.224 | 56.2 | 49.0 | 0.83 | 0.67 | 0.82 |
| Comparative example catalyst 4 | TiO$_2$-V$_2$O$_3$ MoO$_3$ | - | 79.2 | 4.2 | 0 | 0.053 | 78.5 | 51.3 | 1.54 | 0.72 | 0.47 |
| Comparative example catalyst 6 | TiO$_2$-V$_2$O$_3$ | - | 94 | 6 | 0 | 0.064 | 81.0 | 51.0 | 1.66 | 0.71 | 0.43 |
| Comparative example catalyst 7 | TiO$_2$-V$_2$O$_3$ | - | 88 | 12 | 0 | 0.136 | 76.2 | 47.7 | 1.44 | 0.65 | 0.45 |
| Comparative example catalyst 8 | Comparative example 6·MPS· mixture | 60 | 47 | 3 | 50 | 0.064 | 71.0 | 30.0 | 1.24 | 0.36 | 0.29 |

In the results in Table 5, there are differences in initial performance among catalysts, so degrees of deterioration due to poisoning by phosphorus were compared through deterioration ratio k/k0. It is found from the results that the catalyst in the present invention has high resistance to deterioration due to poisoning by phosphorus.

The example catalysts with an active ingredient supported in mesoporous silica, which is a carrier material having fine holes with controlled diameters, have higher deterioration ratio k/k0 values, that is, higher resistance to deterioration due to poisoning by phosphorus than comparative example catalysts 4, 6, and 7.

Although comparative example catalyst 8 includes mesoporous silica, it has a small k/k0 value, that is, is largely deteriorated due to poisoning by phosphorus. Accordingly, it is found that when an active ingredient is supported in fine holes in mesoporous silica, as in the example catalysts, deterioration due to poisoning by phosphorus is suppressed and that there is no effect of suppressing deterioration due to poisoning by phosphorus when mesoporous silica is just present in a catalyst as in comparative example catalyst 8.

Example catalysts 7 and 9 include titanium supported in the TMP method, and example catalyst 8 includes vanadium supported in the TMP method. In these catalysts, almost no deterioration was recognized in treatment of poisoning by phosphorus. However, the initial performance of example catalysts 7 to 9 was not so high. Since the TMP method is a method by which a catalyst ingredient can be reliably supported in fine holes, it can be said that resistance to poisoning is high. Example catalyst 12 includes vanadium supported by a combination of the TMP method and an impregnation method. Although example catalyst 12 exhibited lower initial performance than example catalyst 11 in which vanadium was supported only by the impregnation method, the NOx removing rate of example catalyst 12 after the treatment of poisoning by phosphorus was high, further improving resistance to poisoning. It is found from these results that the TMP method is effective in supporting an active ingredient in fine holes in mesoporous silica and thereby deterioration due to poisoning by phosphorus is suppressed.

Example catalyst 14 using mesoporous silica having fine holes with an average diameter of 5.6 $\mu$m exhibited higher initial performance than example catalyst 13 using mesoporous silica having fine holes with an average diameter of 60 $\mu$m.

Example catalysts 15 to 19 include Mo as another catalyst active ingredient besides Ti and V. When these active ingredients are supported in mesoporous silica if the content of $TiO_2$ is within a range of 18.0 to 60.0 wt%, the content of $V_2O_5$ is within a range of 1.0 to 17 wt%, and the ratio $V_2O_5/TiO_2$ is within a range of 0.07 to 0.60, a catalyst having high resistance to poisoning can be obtained even with elements such as Mo included.

Experiment example 6

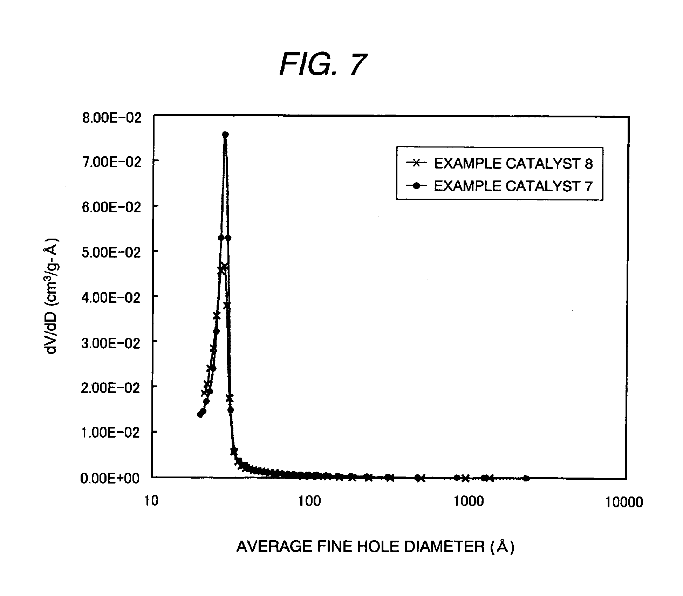

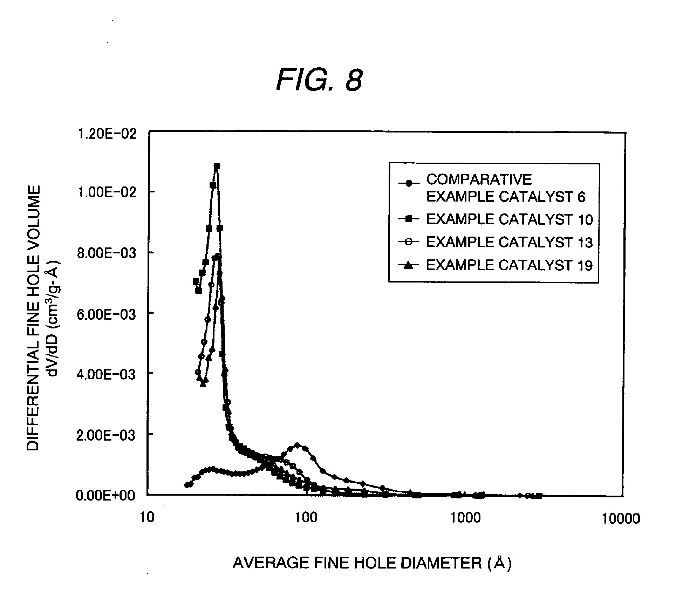

Fine hole distributions and fine hole volumes were measured for example catalysts 7, 8, 10, 13, and 19 as well as comparative example catalyst 6, in a nitrogen gas adsorption method in which fine holes with diameters of 10 to 3000 Å are measured. The ASAP2010 from Shimadzu Corporation was used in the measurement. Isothermal lines in nitrogen gas adsorption at a liquid nitrogen temperature were measured, and differential fine hole volumes for average fine hole diameters of fine holes in these catalysts were obtained from measured data in the BJH method. FIGs. 7 and 8 illustrate distributions of differential fine hole volumes for different average fine hole diameters. An average fine hole diameters when each differential fine hole volume is maximized was obtained from the distributions. Table 6 shows the results.

[Table 6]

Table 6

|  | Average fine hole diameter when the differential fine hole volume is maximized (A) |
|---|---|
| Example catalyst 7 | 28.5 |
| Example catalyst 8 | 28.6 |
| Example catalyst 10 | 26.5 |
| Example catalyst 13 | 27.2 |
| Example catalyst 19 | 27.6 |
| Comparative example catalyst 6 | 86.6 |

The average fine hole diameter corresponding to the maximum differential fine hole volume of example catalyst 7 is 28.5 Å. That is, of the fine holes in example catalyst 7, the number of fine holes with a diameter of 28.5 Å is largest.

The average fine hole diameters corresponding to the maximum differential fine hole volumes of the example catalysts shown in Table 6 fall within a range of 20 to 40 Å. By comparison, the average fine hole diameter corresponding to the maximum differential fine hole volume of comparative example catalyst 6 is 86.6 Å, indicating that comparative example catalyst 6 has larger fine hole diameters than the example catalysts.

Example catalyst 20

Vanadium was supported in mesoporous silica by the TMP method. Specifically, 15 grams of mesoporous silica (MCM-41 from Nippon Chemical Industrial Co., Ltd., average particle size = 60 $\mu$m) was placed in a Schrenck eggplant-shaped flask. The flask was then connected to a Schrenck line, and heated to 180°C in an oil bath, after which the flask was subject to vacuum drying for five hours. A nitrogen gas was supplied into the eggplant-shaped flask. Then 110 cc of dehydrated tetrahydrofuran and 2.7 grams of vanadium tri-n-butoxide oxide were added under a flow of nitrogen gas. The resulting mixed solution was stirred for 15 hours at room temperature under the nitrogen gas flow. Upon completion of the stirring, the eggplant-shaped flask was left stationary to have the solid matter settle, after which the supernatant fluid was removed with an injector. The solid matter left in the eggplant-shaped flask was vacuum-dried for five hours at room temperature by using a Schrenck line. The resulting dried powder was dried for two hours at 150°C in the atmosphere. Finally, the powder was burnt for two hours at 500°C in the atmosphere. As a result, vanadium was supported in the mesoporous silica by 5.3 wt%, the amount being calculated for $V_2O_5$.

Experiment example 7

Electron states in vanadium (V) in example catalysts 7 and 20 were measured in X-ray photoelectron spectroscopy (XPS). In the measurement, the X-ray photoelectron spectrometer AXIS-HS from Kratos Analytical/Shimadzu Corporation was used. The initial performance (denitration activity before phosphorus treatment) of example catalyst 20 was measured in the same way as in experiment example 1.
The initial NOx removing rate of example catalyst 20 was 3%. By comparison, the initial NOx removing rate of example catalyst 7 shown in Table 5 was 29.3%. The amounts of vanadium supported, which is calculated for $V_2O_5$, in example catalysts 7 and 20 are almost the same. The mole ratio $V^{4+}/V^{5+}$ between tetravalent vanadium ($V^{4+}$) and pentavalent vanadium ($V^{5+}$) was obtained from the vanadium electron states measured in XPS. The measurement results shown in Table 7 indicate that $V^{4+}/V^{5+}$ of example catalyst 7 is 0.65. Since the value falls within a range of 0.5 to 0.7, $_V{}^{4+}$ and $_V{}^{5+}$ are well balanced, indicating that example catalyst 7 has higher performance than example catalyst 20.

[Table 7]

Table 7

| | Waveform analysis result of $V_{2p3/2}$ (%) | | | $V^{4+}/V^{5+}$ (mole ratio) | Initial denitration activity (%) |
|---|---|---|---|---|---|
| | $V_2O_3$ | $VO_2$ | $V_2O_5$ | | |
| Example catalyst 7 | 9 | 36 | 55 | 0.65 | 29.3 |
| Example catalyst 20 | 11 | 28 | 62 | 0.45 | 3 |

**Claims**

1.  A nitrogen oxide removing catalyst for removing a nitrogen oxide from an exhaust gas including the nitrogen oxide and a phosphorous compound, wherein an active ingredient is supported in a fine hole in a material in which a diameter of the fine hole is controlled.

2.  A nitrogen oxide removing catalyst for removing a nitrogen oxide from an exhaust gas including the nitrogen oxide and a phosphorous compound, the catalyst comprising:

    a porous carrier having a plurality of fine holes; and
    an active ingredient supported in the plurality of fine holes in the carrier;
    wherein an average fine hole diameter of the plurality of fine holes in the porous carrier is within a range of 8 Å to 9 Å, the average fine hole diameter being obtained from fine holes measured in a gas adsorption method in which fine holes with diameters of 3.4 Å to 14 Å are measured.

3. A nitrogen oxide removing catalyst for removing a nitrogen oxide from an exhaust gas including the nitrogen oxide and a phosphorous compound, the catalyst comprising:

a porous carrier having a plurality of fine holes; and
an active ingredient supported in the plurality of fine holes in the carrier;
wherein an average fine hole diameter of the plurality of fine holes in the porous carrier is within a range of 8 Å to 9 Å, the average fine hole diameter being calculated from a crystal structure of the porous carrier.

4. The nitrogen oxide removing catalyst according to claim 2, wherein a volume of fine holes with diameters of 7 Å to 10 Å occupies 50% or more of a total fine hole volume of fine holes measured in a gas adsorption method in which fine holes with diameters of 3.4 Å to 14 Å are measured.

5. The nitrogen oxide removing catalyst according to claim 4, wherein a volume of fine holes with diameters of 7 Å to 10 Å measured in a gas adsorption method in which fine holes with diameters of 3.4 Å to 14 Å are measured occupies 20% or more of a total fine hole volume of all fine hole volumes measured in an $N_2$ gas adsorption method in which fine holes with diameters of 10 Å to 3000 Å are measured.

6. The nitrogen oxide removing catalyst according to any one of claims 1 to 5, wherein the porous carrier has fine holes with a two-dimensional or three-dimensional shape.

7. The nitrogen oxide removing catalyst according to any one of claims 1 to 6, wherein the porous carrier is Y-type zeolite or X-type zeolite.

8. The nitrogen oxide removing catalyst according to any one of claims 1 to 6, wherein the porous carrier is mesoporous silica.

9. The nitrogen oxide removing catalyst according to any one of claims 1 to 8, wherein the active ingredient includes at least one selected from the group consisting of Cu, Fe, Co, vanadium, molybdenum, and tungsten.

10. The nitrogen oxide removing catalyst according to any one of claims 1 to 8, wherein titanium and vanadium are used as the active ingredient.

11. A catalyst plate, for a denitration catalyst unit, which includes a plate-like member or a mesh-like member and a nitrogen oxide removing catalyst applied to the member, wherein the nitrogen oxide removing catalyst is the nitrogen oxide removing catalyst described in claim 1.

12. A catalyst plate, for a denitration catalyst unit, which includes a plate-like member or a mesh-like member and a multi-layer nitrogen oxide removing catalysts applied to the member, wherein an outermost nitrogen oxide removing catalyst of the multi-layer nitrogen oxide removing catalysts is the nitrogen oxide removing catalyst described in any one of claims 1 to 10.

13. A nitrogen oxide removing method of removing a nitrogen oxide in an exhaust gas including the nitrogen oxide and a phosphorous compound through reduction by bringing the exhaust gas and a reducing agent into contact with a nitrogen oxide removing catalyst, wherein the nitrogen oxide removing catalyst is the nitrogen oxide removing catalyst described in claim 1.

14. A nitrogen oxide removing catalyst for removing a nitrogen oxide from an exhaust gas including the nitrogen oxide and a phosphorous compound, wherein a fine hole diameter ratio B/A between a molecule diameter A of the phosphorous compound and an average fine hole diameter of the catalyst or a fine hole diameter B is greater than or equal to 0.78 and smaller than or equal to 1.12, the fine hole diameter being calculated from a crystal structure.

15. The nitrogen oxide removing catalyst according to claim 14, wherein a volume of fine holes, the fine hole diameter ratio B/A of which is within a range of 0.78 to 1.12, occupies 20% or more of a total fine hole volume of all fine hole volumes measured in an $N_2$ gas adsorption method in which fine holes with diameters of 10 Å to 3000 Å are measured.

16. A nitrogen oxide removing catalyst for removing a nitrogen oxide from an exhaust gas including the nitrogen oxide and a phosphorous compound, the nitrogen oxide removing catalyst comprising:

a carrier made of mesoporous silica; and
an active ingredient supported in the carrier;
wherein the active ingredient includes titanium and vanadium.

17. The nitrogen oxide removing catalyst according to claim 16, wherein the active ingredient includes titanium by 18.0 wt% to 60.0 wt%, which is calculated for $TiO_2$, and also includes vanadium by 1.0 wt% to 17 wt%, which is calculated for $V_2O_5$.

18. The nitrogen oxide removing catalyst according to claim 16 or 17, wherein a weight ratio between titanium and vanadium $V_2O_5/TiO_2$, which is calculated for $TiO_2$ and $V_2O_5$, is within a range of 0.07 to 0.60.

19. The nitrogen oxide removing catalyst according to any one of claims 16 to 18, wherein mesoporous silica having primary particles with an average particle diameter of 300 nm or less is used as the carrier.

20. The nitrogen oxide removing catalyst according to any one of claims 16 to 19, wherein mesoporous silica having secondary particles with an average particle diameter of 2 $\mu$m to 10 $\mu$m is used as the carrier.

21. The nitrogen oxide removing catalyst according to any one of claims 16 to 20, wherein:

the nitrogen oxide removing catalyst is shaped like particles; and
an average particle diameter of the secondary particles is within a range of 2 $\mu$m to 80 $\mu$m.

22. The nitrogen oxide removing catalyst according to any one of claims 16 to 21, wherein an average fine hole diameter when a differential fine hole volume is maximized in a fine hole distribution of the catalyst is within a range of 20 Å to 40 Å when the distribution is measured in a gas adsorption method in which fine holes with diameters of 10 Å to 3000 Å are measured.

23. The nitrogen oxide removing catalyst according to any one of claims 16 to 22, wherein:

both a tetravalent vanadium compound and a pentavalent vanadium compound are included as the vanadium; and
a mole ratio $V^{4+}/V^{5+}$ between tetravalent vanadium and pentavalent vanadium is within a range of 0.5 to 0.7.

# FIG. 1

# FIG. 2

## FIG. 3

## FIG. 4

# FIG. 5A

# FIG. 5B

## FIG. 6A

8

9

11

## FIG. 6B

8

10

11

## FIG. 7

AVERAGE FINE HOLE DIAMETER (Å)

## FIG. 8

## INTERNATIONAL SEARCH REPORT

| International application No. |
| --- |
| PCT/JP2008/052269 |

A.   CLASSIFICATION OF SUBJECT MATTER
*B01J35/10*(2006.01)i, *B01D53/94*(2006.01)i, *B01J29/14*(2006.01)i, *F01N3/10* (2006.01)i

According to International Patent Classification (IPC) or to both national classification and IPC

B.   FIELDS SEARCHED

Minimum documentation searched (classification system followed by classification symbols)
B01J35/10, B01D53/94, B01J29/14, F01N3/10

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>A | JP 3272462 B2  (Mitsubishi Heavy Industries, Ltd.),<br>08 April, 2002 (08.04.02),<br>Claims; examples<br>(Family: none) | 1,6,7,9-15<br>2-5 |
| X<br>A | JP 3157555 B2  (Mazda Motor Corp.),<br>16 April, 2001 (16.04.01),<br>Claims; examples<br>(Family: none) | 1,6,7,9-15<br>2-5 |
| X<br>A | JP 2002-210369 A  (Toyota Motor Corp.),<br>30 July, 2002 (30.07.02),<br>Claims; examples<br>(Family: none) | 1,6,8-13<br>16-23 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 April, 2008 (23.04.08) | Date of mailing of the international search report<br>13 May, 2008 (13.05.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/052269

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2006-81957 A  (Asahi Kasei Corp.),<br>30 March, 2006 (30.03.06),<br>Claims; examples<br>(Family: none) | 1,6,8-13<br>16-23 |
| A | JP 2006-314935 A  (Babcock Hitachi Kabushiki Kaisha),<br>24 November, 2006 (24.11.06),<br>(Family: none) | 1-23 |
| A | JP 2005-537929 A  (Envica GmbH),<br>15 December, 2005 (15.12.05),<br>& EP 1536878 A1        & US 2006/0135347 A1<br>& WO 2004/026447 A1 | 1-23 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP SHO63198812350 B
- JP SHO63198851948 B

- JP 2000308832 A